# EUROPEAN PATENT APPLICATION

(11) **EP 4 827 099 A1**
(43) Date of publication of application: **21.10.2026**
(21) Application number: 24910125.4
(22) Date of filing: 09.10.2024
(51) Int. Cl.: H04N 21/8358, H04L 9/08

(54) **MEDIA DATA PLAYBACK METHOD AND APPARATUS, MEDIA DATA TRACING METHOD AND APPARATUS, AND PROTECTION SYSTEM**

(30) Priority: 29.12.2023 CN 202311873583
(71) Applicant: Huawei Technologies Co., Ltd., Shenzhen, Guangdong 518129 (CN)
(72) Inventor: GENG, Feng, Shenzhen, Guangdong 518129 (CN); WU, Panyu, Shenzhen, Guangdong 518129 (CN); OUYANG, Yueling, Shenzhen, Guangdong 518129 (CN); ZHAO, Gaoyong, Shenzhen, Guangdong 518129 (CN)
(74) Representative: Huawei European IPR
(86) International application number: PCT/CN2024/123728
(87) International publication number: WO 2025/139183

(57) **Abstract**

This application provides a media data play method and apparatus, source tracing method and apparatus, and protection system, and belongs to the field of computer technologies. A terminal generates a digital watermark based on authentication attribute information of to-be-played media data, where the digital watermark includes the authentication attribute information and signature information obtained by signing the authentication attribute information by using a target key. The target key is obtained based on an identity private key held by the terminal and an authentication public key provided by an authenticator. The terminal embeds the digital watermark into the media data, and plays the media data into which the digital watermark is embedded. The authentication attribute information identifies a range of a play source of the media data, and plays a role of identity information of the media data, so that a source tracing range of the media data can be narrowed. The signature information is used to ensure authenticity of the authentication attribute information of the media data. Provided that the identity private key held by the terminal is not disclosed, another user terminal cannot calculate the target key, so that another person can be prevented from maliciously forging a watermark and leaking media data for framing.

## Description

This application claims priority to Chinese Patent Application No. 202311873583.4, filed on December 29, 2023 and entitled "MEDIA DATA PLAY METHOD AND APPARATUS, SOURCE TRACING METHOD AND APPARATUS, AND PROTECTION SYSTEM", which is incorporated herein by reference in its entirety.

### TECHNICAL FIELD

This application relates to the field of computer technologies, and in particular, to a media data play method and apparatus, source tracing method and apparatus, and protection system.

### BACKGROUND

With development of the information technology, an information security problem becomes prominent. To resolve problems of multimedia copyright infringement and unauthorized recording and leakage of information, people have made extensive exploration in the fields of encryption and digital watermarking. An encryption technology can implement secure transmission of media data between a provider and a recipient. However, after the recipient obtains encrypted information and obtains media data in plaintext through decryption, the encryption technology no longer provides protection. Then, if the recipient retransmits the media data or the media data is unauthorizedly recorded in a play process, the media data is unauthorizedly leaked. A digital watermarking technology can embed copyright information or user information of the recipient into the media data to protect copyright of the media data, prove authenticity and reliability of products, trace piracy, or provide additional information of products. A key to implement the digital watermarking technology is how to generate and embed secure and reliable digital watermarks into the media data.

### SUMMARY

This application provides a media data play method and apparatus, source tracing method and apparatus, and protection system.

According to a first aspect, a media data play method is provided. The method is applied to a terminal. The method includes: A terminal obtains authentication attribute information of to-be-played media data, where the authentication attribute information identifies a range of a play source of the media data. The terminal generates a digital watermark based on the authentication attribute information, where the digital watermark includes the authentication attribute information and signature information obtained by signing the authentication attribute information by using a target key. The target key is obtained based on an identity private key held by the terminal and an authentication public key provided by an authenticator. Only the authenticator has a source tracing permission for the media data. The terminal embeds the digital watermark into the media data, and plays the media data into which the digital watermark is embedded.

In this application, the authentication attribute information of the media data and the signature information obtained by signing the authentication attribute information by using the target key are carried in the digital watermark. The authentication attribute information in the digital watermark may declare the range of the play source of the media data, and play a role of identity information of the media data, so that a source tracing range of the media data is narrowed. The signature information in the digital watermark is used to ensure authenticity of the authentication attribute information of the media data, that is, to ensure authenticity of the media data. Because the target key is obtained based on the identity private key held by the terminal and the authentication public key provided by the authenticator, provided that the identity private key held by the terminal is not leaked, another user terminal cannot calculate the target key, and therefore cannot use the target key to obtain the signature information through calculation to forge the watermark. Therefore, another person can be prevented from maliciously forging the watermark and leaking the media data for framing. In addition, in this application, the play source of the media data is proved by using the signature information, instead of directly carrying user or device identity information in the digital watermark. Therefore, leakage of the user or device identity information can also be avoided.

In a first possible implementation, the terminal generates the target key for the identity private key and the authentication public key by using a key agreement algorithm. Correspondingly, an implementation in which the terminal signs the authentication attribute information by using the target key includes: The terminal signs the authentication attribute information by using the target key and based on a symmetric signature algorithm, to obtain a symmetric signature value, where the signature information is the symmetric signature value, or the signature information is a truncated result value of the symmetric signature value.

In this implementation, only the authenticator and the terminal can calculate a same symmetric key. Provided that the identity private key held by the terminal and the authentication private key held by the authenticator are not leaked, any third party other than the terminal and the authenticator cannot calculate the target key, and therefore cannot use the target key to obtain the signature information through calculation to forge the watermark. Therefore, another person can be prevented from maliciously forging the watermark and leaking the media data for framing. In addition, in this application, truncation processing may be performed on the symmetric signature value, to embed the truncated result value into the media data as watermark information, so that a watermark embedding capacity can be reduced, thereby ensuring fidelity and robustness of the media data (especially audio data) after the watermark information is embedded.

Optionally, in the foregoing first possible implementation, the authentication public key is jointly provided by a plurality of approvers, the authentication public key is a distributed key generation (distributed key generation, DKG) public key, the plurality of approvers jointly hold n private key shards, a quantity of private key shards held by each approver is less than t, the DKG public key is obtained through calculation based on the n private key shards, a private key corresponding to the DKG public key is obtained based on at least t private key shards of the n private key shards, n is an integer greater than 1, and 2≤t≤n.

In this implementation, the authenticator needs to rely on the plurality of approvers to restore a private key corresponding to the authentication public key, and further obtains through calculation, with reference to the identity public key held by the terminal, a key that is the same as the target key used by the terminal to generate the digital watermark. In comparison with a solution in which the authenticator directly holds the authentication private key, in this solution, because the authenticator is supervised by the plurality of approvers, a risk that the authenticator maliciously forges a watermark to frame a terminal user can be reduced, reliability and watermark security of the authenticator are improved, and reliability of watermark source tracing is further improved.

In a second possible implementation, the terminal generates the target key for the identity private key and the authentication public key by using an asymmetric key generation algorithm. Correspondingly, an implementation in which the terminal signs the authentication attribute information by using the target key includes: The terminal signs the authentication attribute information by using the target key and based on an asymmetric signature algorithm, to obtain an asymmetric signature value, where the signature information is the asymmetric signature value.

In this implementation, only the terminal can calculate the target key used to generate the digital watermark, so that any third party including the authenticator can be prevented from maliciously forging the watermark and leaking the media data for framing. In addition, only the authenticator can calculate a key that can be used to verify the digital watermark generated by the terminal, that is, only the authenticator has the source tracing permission for the media data played by the terminal, which can well protect privacy of the terminal user.

Optionally, an implementation in which the terminal generates the target key for the identity private key and the authentication public key by using the asymmetric key generation algorithm includes: The terminal generates a derived key based on the identity private key and the authentication public key by using a key derivation function. The terminal generates the target key based on the derived key and the identity private key.

Optionally, the target key is SK, and SK=(K+SKu) mod q, where SKu is the identity private key, K is the derived key, q is a prime number, mod q indicates that a modulo operation is performed on q, and a value range of SK is [1, q).

Optionally, the terminal sends a key obtaining request to the authenticator, where the key obtaining request includes a device identifier of the terminal. The terminal receives a key obtaining response sent by the authenticator, where the key obtaining response includes the authentication public key.

Optionally, the terminal is a conference terminal participating in a conference, and the media data comes from the conference. The authentication attribute information may include a conference identifier of the conference and/or conference timestamp information of the conference.

Optionally, the terminal receives media data sent by another conference terminal participating in the conference.

According to a second aspect, a media data source tracing method is provided. The method is applied to an authenticator. The method includes: An authenticator obtains a digital watermark in source-to-be-traced media data, where the digital watermark includes authentication attribute information of the media data and signature information obtained based on the authentication attribute information, and the authentication attribute information identifies a range of a play source of the media data. The authenticator determines the range of the play source based on the authentication attribute information. The authenticator generates a first key based on an authentication private key held by the authenticator and a first identity public key held by a first terminal, where the first terminal is any terminal within the range of the play source. The authenticator verifies the signature information based on the first key and the authentication attribute information, to determine whether the media data comes from the first terminal.

In this application, only an authenticator that provides an authentication public key for the terminal can calculate a key for verifying the digital watermark generated by the terminal. Therefore, only the authenticator has a source tracing permission for the media data, and another terminal user cannot trace the play source of the media data even if the digital watermark in the media data is extracted. This can protect user privacy of the play source, and reduce a risk of leaking information about the play source.

In a first possible implementation, an implementation in which the authenticator generates the first key based on the authentication private key held by the authenticator and the first identity public key held by the first terminal includes: The authenticator generates the first key for the authentication private key and the first identity public key by using a key agreement algorithm. Correspondingly, an implementation in which the authenticator verifies the signature information based on the first key and the authentication attribute information includes: The authenticator signs the authentication attribute information by using the first key and based on a symmetric signature algorithm, to obtain a symmetric signature value. The authenticator determines that the media data comes from the first terminal if the signature information matches the symmetric signature value.

In this implementation, only the authenticator and the terminal can calculate a same symmetric key. Provided that the identity private key held by the terminal and the authentication private key held by the authenticator are not leaked, any third party other than the terminal and the authenticator cannot calculate the target key, and therefore cannot use the target key to obtain the signature information through calculation to forge the watermark. Therefore, another person can be prevented from maliciously forging the watermark and leaking the media data for framing.

Optionally, in the foregoing first possible implementation, an authentication public key corresponding to the authentication private key is jointly provided by a plurality of approvers, the authentication public key is a DKG public key, the plurality of approvers jointly hold n private key shards, a quantity of private key shards held by each approver is less than t, the DKG public key is obtained through calculation based on the n private key shards, the authentication private key is obtained based on at least t private key shards of the n private key shards, n is an integer greater than 1, and 2≤t≤n.

In this implementation, the authenticator needs to rely on the plurality of approvers to restore a private key corresponding to the authentication public key, and further obtains through calculation, with reference to the identity public key held by the terminal, a key that is the same as the target key used by the terminal to generate the digital watermark. In comparison with a solution in which the authenticator directly holds the authentication private key, in this solution, because the authenticator is supervised by the plurality of approvers, a risk that the authenticator maliciously forges a watermark to frame a terminal user can be reduced, reliability and watermark security of the authenticator are improved, and reliability of watermark source tracing is further improved.

Optionally, a length of the signature information is less than a length of the symmetric signature value, and an implementation in which the authenticator determines that the media data comes from the first terminal if the signature information matches the symmetric signature value includes: The authenticator determines that the media data comes from the first terminal if the signature information is the same as a truncated result value of the symmetric signature value.

In a second possible implementation, an implementation in which the authenticator generates the first key based on the authentication private key held by the authenticator and the first identity public key held by the first terminal includes: The authenticator generates the first key for the authentication private key and the first identity public key by using an asymmetric key generation algorithm. Correspondingly, an implementation in which the authenticator verifies the signature information based on the first key and the authentication attribute information includes: The authenticator performs signature verification on the authentication attribute information and the signature information by using the first key; and the authenticator determines that the media data comes from the first terminal if the signature verification succeeds.

In this implementation, only the terminal can calculate the target key used to generate the digital watermark, so that any third party including the authenticator can be prevented from maliciously forging the watermark and leaking the media data for framing. In addition, only the authenticator can calculate a key that can be used to verify the digital watermark generated by the terminal, that is, only the authenticator has the source tracing permission for the media data played by the terminal, which can well protect privacy of the terminal user.

Optionally, an implementation in which the authenticator generates the first key for the authentication private key and the first identity public key by using the asymmetric key generation algorithm includes: The authenticator generates a derived key based on the authentication private key and the first identity public key by using a key derivation function. The authenticator generates the first key based on the derived key and the authentication private key.

Optionally, the first key is PK, and PK=g^{K}·PKu, where PKu is the first identity public key, K is the derived key, and g is an original root of a prime number q.

Optionally, the authenticator receives a key obtaining request sent by a terminal within the range of the play source, where the key obtaining request includes a device identifier of the terminal. The authenticator sends a key obtaining response to the terminal, where the key obtaining response includes the authentication public key corresponding to the authentication private key.

Optionally, the range of the play source includes a plurality of terminals. If it is determined that the media data does not come from the first terminal, the authenticator generates a second key based on the authentication private key and a second identity public key held by a second terminal, where the second terminal is any terminal other than the first terminal within the range of the play source. The authenticator verifies the signature information based on the second key and the authentication attribute information, to determine whether the media data comes from the second terminal.

In this application, the authenticator may perform traversal verification on all terminals within the range of the play source of the media data until the terminal from which the media data comes is determined.

Optionally, the authentication attribute information includes a conference identifier and/or conference timestamp information, and an implementation in which the authenticator determines the range of the play source based on the authentication attribute information includes: The authenticator determines, based on the authentication attribute information, a conference from which the media data comes, and determines that the range of the play source includes a conference terminal participating in the conference.

According to a third aspect, a media data play apparatus is provided. The apparatus includes a plurality of functional modules, and the plurality of functional modules interact with each other to implement the method according to the first aspect and the implementations of the first aspect. The plurality of functional modules may be implemented based on software, hardware, or a combination of software and hardware, and the plurality of functional modules may be randomly combined or divided based on a specific implementation.

According to a fourth aspect, a media data source tracing apparatus is provided. The apparatus includes a plurality of functional modules, and the plurality of functional modules interact with each other to implement the method according to the second aspect and the implementations of the second aspect. The plurality of functional modules may be implemented based on software, hardware, or a combination of software and hardware, and the plurality of functional modules may be randomly combined or divided based on a specific implementation.

According to a fifth aspect, a media data protection system is provided. The media data protection system includes a terminal and an authenticator. The terminal is configured to perform the method according to the first aspect and the implementations of the first aspect, and the authenticator is configured to perform the method according to the second aspect and the implementations of the second aspect.

Optionally, the system is a video conference system, the terminal is a conference terminal, and the authenticator is a conference administrator.

According to a sixth aspect, a terminal is provided. The terminal includes a processor and a memory. The memory is configured to store a computer program, the computer program includes program instructions, and the processor is configured to invoke the computer program, to implement the method according to the first aspect and the implementations of the first aspect.

According to a seventh aspect, a computer device is provided. The computer device includes a processor and a memory. The memory is configured to store a computer program, the computer program includes program instructions, and the processor is configured to invoke the computer program, to implement the method according to the second aspect and the implementations of the second aspect.

According to an eighth aspect, a computer-readable storage medium is provided. The computer-readable storage medium stores instructions; and when the instructions are executed by a processor, the method according to the first aspect and the implementations of the first aspect is implemented, or the method according to the second aspect and the implementations of the second aspect is implemented.

According to a ninth aspect, a computer program product is provided. The computer program product includes a computer program. When the computer program is executed by a processor, the method according to the first aspect and the implementations of the first aspect is implemented, or the method according to the second aspect and the implementations of the second aspect is implemented.

According to a tenth aspect, a chip is provided. The chip includes a programmable logic circuit and/or program instructions. When the chip runs, the method according to the first aspect and the implementations of the first aspect is implemented, or the method according to the second aspect and the implementations of the second aspect is implemented.

### BRIEF DESCRIPTION OF DRAWINGS

FIG. 1 is an implementation diagram of a digital watermarking technology according to an embodiment of this application;
FIG. 2 is a diagram of a video conference scenario according to an embodiment of this application;
FIG. 3 is a schematic flowchart of implementing a visible watermarking algorithm according to a related technology;
FIG. 4 is a schematic flowchart of implementing a watermarking algorithm combining symmetric encryption according to a related technology;
FIG. 5 is a diagram of an application scenario according to an embodiment of this application;
FIG. 6 is a schematic flowchart of a media data play method according to an embodiment of this application;
FIG. 7 is a schematic flowchart of a media data source tracing method according to an embodiment of this application;
FIG. 8 is a diagram of a copyright authentication scenario of media data according to an embodiment of this application;
FIG. 9 is a diagram of a leakage locating scenario of media data according to an embodiment of this application;
FIG. 10 is a diagram of a structure of a media data play apparatus according to an embodiment of this application;
FIG. 11 is a diagram of a structure of a media data source tracing apparatus according to an embodiment of this application; and
FIG. 12 is a diagram of a hardware structure of a computer device according to an embodiment of this application.

### DESCRIPTION OF EMBODIMENTS

To make the objectives, technical solutions, and advantages of this application clearer, the following further describes implementations of this application in detail with reference to accompanying drawings.

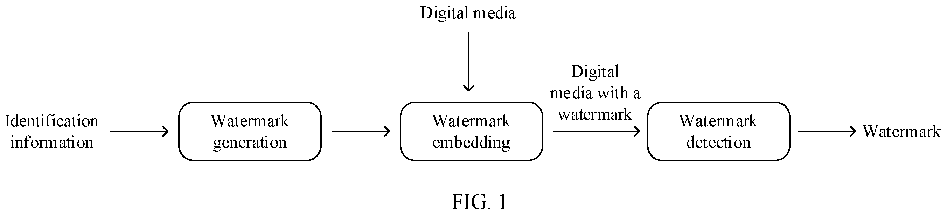

A digital watermarking technology is an information hiding technology. Watermark information embedded into a carrier file does not affect observability and integrity of an original file. The digital watermarking technology is widely used, including copyright protection, anti-counterfeiting, digital forensics, information hiding, and other fields. At present, the digital watermarking technology has become one of important means of digital media security protection. For example, FIG. 1 is an implementation diagram of a digital watermarking technology according to an embodiment of this application. As shown in FIG. 1, a watermark is generated based on specific identification information (which may be a digital media creator, a user serial number, copyright information, or the like), and the watermark is embedded into a digital media information carrier. Embedded watermark information can be extracted by performing watermark detection on digital media including the watermark, to indicate some information of the digital media. Digital watermarks may be embedded into various digital media, for example, images, audio, videos, and texts. According to perceptibility of the digital watermarks, the digital watermarks may be classified into visible watermarks and invisible watermarks.

The visible watermarks are perceptually visible watermarks, for example, identifiers inserted or overlaid on images. The visible watermarks are usually visible information directly embedded into digital media, for example, texts or images. The visible watermarks are usually used to visually identify images or videos obtained in a video database or in the Internet, to prevent these images from being used for illegal commercial purposes. Similarly, an audibly perceptible watermark used in audio is an audible watermark. The invisible watermarks are invisible information embedded into digital media, for example, digital code or noise. After the invisible watermarks are embedded into the digital media, the digital media is not damaged too much and original play quality can be retained. When necessary, an owner can extract the watermark from the digital media by using a watermark detection algorithm, to prove ownership or integrity of the digital media.

Basic characteristics of digital watermarking includes fidelity, robustness, and a capacity. The fidelity is used to measure a similarity between signals before and after being processed. After watermark information is embedded into digital media information, specific requirements need to be met in terms of perception. It does not mean that the watermark needs to be visible or invisible, which is determined by application scenarios. The robustness is watermark extractability and detectability after digital media information with watermarks undergoes various signal processing or attacks. Measures of the robustness include vulnerability, effectiveness, and security. The capacity, also referred to as an embedding rate, a loading rate, or a payload, is a maximum quantity of watermark bits (bits) that can be embedded into a unit time or in a media digital work. A larger capacity of a digital watermark indicates that more watermark information can be embedded. However, if the capacity of the digital watermark is too large, fidelity or robustness is affected.

With development of the information technology, a problem of unauthorized leakage of media data becomes more serious. In a related technology, a digital watermark is embedded into media data, to implement identification and tracking of the media data. The media data includes but is not limited to audio data, video data, file data, and other digital streaming media data, for example, a remote shared desktop, a remote shared document, and a remote shared application.

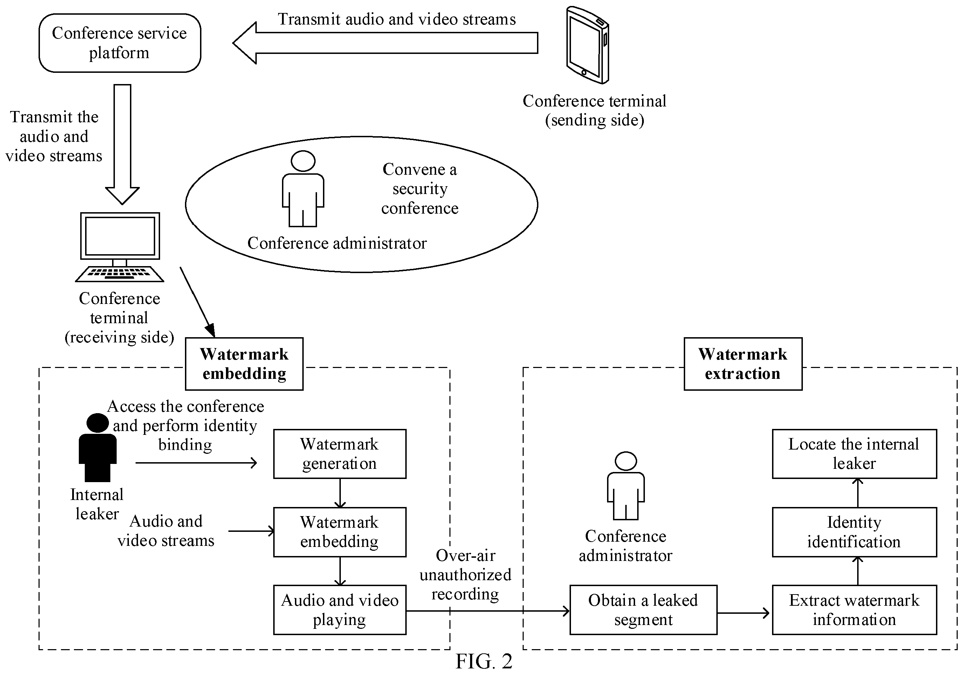

A video conference scenario is used as an example. FIG. 2 is a diagram of a video conference scenario according to an embodiment of this application. As shown in FIG. 2, a conference administrator convenes a security conference, a sending-side conference terminal sends audio and video streams, and transmits data through a conference service platform, and a receiving-side conference terminal receives and plays the audio and video streams, to complete an end-to-end interaction procedure. However, in an audio and video play process, an internal leaker may perform unauthorized recording or forward the played audio and video streams to unauthorized personnel, causing data leakage.

An unauthorized recording behavior includes using screen recording software to trans-record or using a camera to photograph, and technically, it is almost impossible to prevent another person from unauthorized photographing or recording. In this case, a main idea of anti-unauthorized recording is to perform source tracing on an unauthorized-recording person, to deter the unauthorized recording behavior. Therefore, the digital watermarking technology is particularly important herein. As shown in FIG. 2, after receiving the audio and video streams, the receiving-side conference terminal may generate and embed a watermark in real time when playing the audio and video streams, and embedded watermark information is bound to an identity of a user that accesses the conference or an identity of a device that accesses the conference. The identity of the user that accesses the conference may be an identity of a user currently logging in to the conference terminal, and the identity of the device that accesses the conference may be an identity of the conference terminal playing the audio and video streams. In this way, provided that an unauthorized recording behavior (for example, over-air unauthorized recording) occurs, the conference administrator only needs to obtain a small part of leaked segments in the audio and video stream, can extract watermark information by using a watermark extraction algorithm, and identify a device identity and/or a user identity in the watermark information, to locate a device or a user whose data is leaked, thereby implementing source tracing of an internal leaker. Security of a transmission process before a watermark is embedded is ensured by end-to-end encryption.

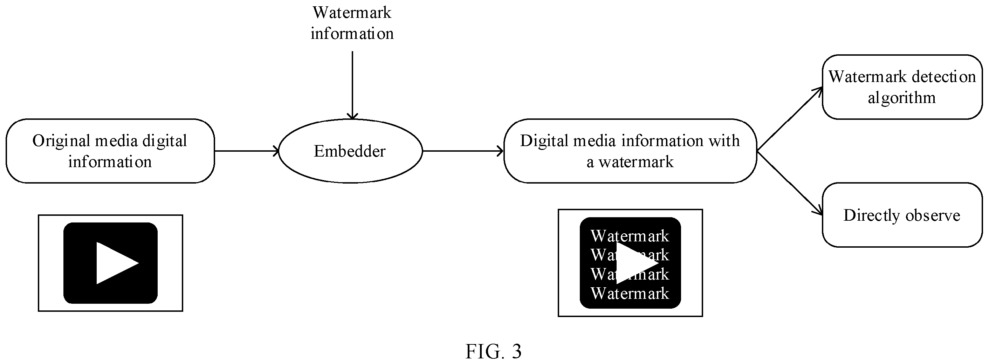

Currently, most video conferences use a visible watermarking algorithm for source tracing and copyright protection. Specifically, watermarks are embedded during audio and video playing, and watermark information includes play-side device information, user information, or the like, so that the watermark information is directly displayed in a played video and is presented in a form visible to naked eyes. For example, FIG. 3 is a schematic flowchart of implementing a visible watermarking algorithm according to a related technology. As shown in FIG. 3, when a receiving-side conference terminal plays conference content in real time, original digital media information is input into an embedder, to embed watermark information (including a user identifier or a device identifier) in real time, and finally obtain digital media information with a watermark. When embedding a watermark, a watermark capacity can be set. A single-row watermark can be center-displayed, and a multi-row watermark may be tiled to cover an entire image. When screen recording software is used to record the conference content, the watermark is also recorded, and a watermark in a video is also recorded during over-air unauthorized recording. Therefore, a visible watermarking algorithm is used, so that presence of the watermark can be detected by using a watermark detection algorithm, or the watermark content can be directly observed, and a watermark detection step is omitted. In this way, a precise source of the video can be more intuitively determined, thereby implementing a post-event tracing function of the watermark and deterring an unauthorized recording behavior.

However, in an existing visible watermarking algorithm, plaintext information of a user or a device is used as a watermark for embedding, and no encryption or hiding processing is performed. Therefore, everyone can see presence of a watermark in digital media in a direct observation form, and everyone can know an owner of the digital media information, thereby leaking user privacy information to some extent. In addition, a visible watermark is easily maliciously damaged by an illegal person, and it is difficult to defend against various attack forms of a watermarking algorithm. For example, a visible watermark in a video may be erased, and then presence of the watermark cannot be observed and cannot be source-traced after being spread again. In addition, another user may guess watermark information of a specific user based on a feature of the visible watermark, to embed the watermark information of the specific user into the video, to perform a malicious framing operation.

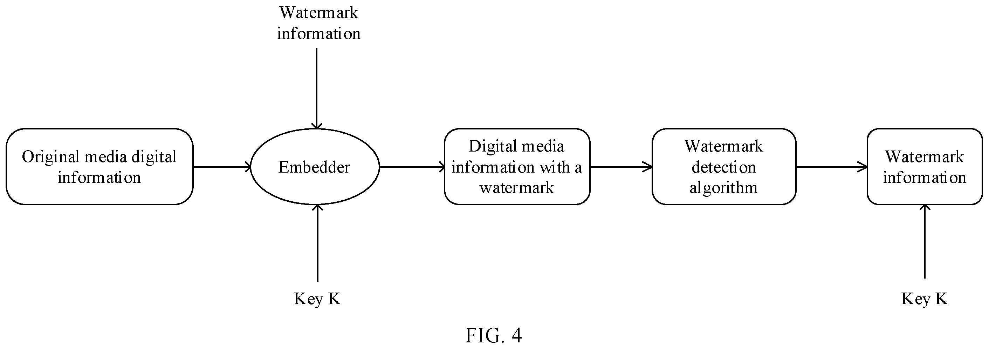

In consideration of protection of user privacy information, a related technology provides a watermarking algorithm combining cryptography. For example, FIG. 4 is a schematic flowchart of implementing a watermarking algorithm combining symmetric encryption according to a related technology. As shown in FIG. 4, when a receiving-side conference terminal plays conference content in real time, a symmetric key K is used to perform encryption processing on watermark information (user information and/or device information), generate a specific watermark, and embed the specific watermark into digital media, to finally obtain digital media information with the watermark. Then, the watermark information may be extracted by using a watermark detection algorithm, and decryption processing is performed on the watermark by using the symmetric key K to obtain specific information included in the watermark, to implement information source tracing. It may be seen that after the watermark information is encrypted by using the key, the watermark information including the user information and/or the device information becomes ciphertext, and is not presented in a plaintext manner, thereby protecting user privacy and preventing malicious forgery and framing behaviors of an unauthorized user (a user without a symmetric key).

However, because a symmetric encryption algorithm is used, a same symmetric key needs to be stored on each authorized user end, and key leakage is prone to occurring. For example, in a video conference scenario, a plurality of conference terminals store a same key to encrypt their own watermark information and embed the encrypted watermark information into audio and video streams, so that a conference administrator subsequently uses the key to perform source tracing on leaked conference content to determine an internal leaker. In addition, because a plurality of user ends use a same key to encrypt watermark information, all persons who have a symmetric key can encrypt and decrypt the watermark information, which causes a problem that an internal person maliciously forges a watermark for framing.

Based on analysis of the related technology, it may be learned that although a visible watermarking technology of the video conference is simple and intuitive, it is easy to erase and has malicious forgery and framing risks. Although the watermarking algorithm combining symmetric encryption improves watermark security, there are still problems of malicious forgery and framing by an internal person. In view of this, this application provides a technical solution. A key generated based on an identity private key held by a terminal and an authentication public key provided by an authenticator is used to generate a watermark. The identity private key held by the terminal is bound to watermark information, and only the terminal holding the identity private key can generate a watermark of the terminal and embed the watermark into media data. Because the private key usually does not leave the device, a leakage risk is low, and therefore another terminal user can be basically prevented from forging the watermark. In addition, only the authenticator can restore the key for verifying the watermark information. A source tracing permission of the media data is limited, so that privacy protection of the terminal user is implemented. The authenticator is an administrator or a trusted organization trusted by the terminal.

A media data playing solution provided in this application is specifically as follows: A terminal generates a digital watermark based on authentication attribute information of to-be-played media data, where the digital watermark includes the authentication attribute information and signature information obtained by signing the authentication attribute information by using a target key. After embedding the digital watermark into the media data, the terminal plays the media data into which the digital watermark is embedded. The authentication attribute information of the media data identifies a range of a play source of the media data. The target key is obtained based on an identity private key held by the terminal and an authentication public key provided by an authenticator. Because generation of the target key is combined with the authentication public key provided by the authenticator, it is equivalent to limiting that only an authenticator holding an authentication private key corresponding to the authentication public key has a source tracing permission for the media data. In this application, the authentication attribute information of the media data and the signature information obtained by signing the authentication attribute information by using the target key are carried in the digital watermark. The authentication attribute information in the digital watermark may declare the range of the play source of the media data, and play a role of identity information of the media data, so that a source tracing range of the media data is narrowed. The signature information in the digital watermark is used to ensure authenticity of the authentication attribute information of the media data, that is, to ensure authenticity of the media data. Because the target key is obtained based on the identity private key held by the terminal and the authentication public key provided by the authenticator, provided that the identity private key held by the terminal is not leaked, another user terminal cannot calculate the target key, and therefore cannot use the target key to obtain the signature information through calculation to forge the watermark. Therefore, another person can be prevented from maliciously forging the watermark and leaking the media data for framing. In addition, in this application, the play source of the media data is proved by using the signature information, instead of directly carrying user or device identity information in the digital watermark. Therefore, leakage of the user or device identity information can also be avoided.

Because the key used by the terminal to generate the digital watermark is obtained through calculation based on the identity private key held by the terminal and the authentication public key provided by the authenticator, correspondingly, the authenticator can calculate, based on the authentication private key held by the authenticator and an identity public key held by the terminal, the key for verifying the digital watermark generated by the terminal. Therefore, the authenticator has a source tracing capability of the media data into which the digital watermark is embedded and that is played by the terminal. In this way, when copyright information of the media data is questioned, or a leakage source needs to be located when the media data is leaked, the authenticator may perform source tracing and evidence collection on the media data. A media data source tracing solution provided in this application is specifically as follows: An authenticator obtains a digital watermark in source-to-be-traced media data, where the digital watermark includes authentication attribute information of the media data and signature information obtained based on the authentication attribute information, and the authentication attribute information identifies a range of a play source of the media data. The authenticator determines the range of the play source of the media data based on the authentication attribute information, generates a key based on an authentication private key held by the authenticator and an identity public key held by a terminal within the range of the play source, and further verifies the signature information in the digital watermark based on the key and the authentication attribute information, to determine whether the media data comes from the terminal. In this application, only an authenticator that provides an authentication public key for the terminal can calculate a key for verifying the digital watermark generated by the terminal. Therefore, only the authenticator has a source tracing permission for the media data, and another terminal user cannot trace the play source of the media data even if the digital watermark in the media data is extracted. This can protect user privacy of the play source, and reduce a risk of leaking information about the play source.

In a first possible implementation, the solution of this application is implemented based on a watermarking algorithm combining symmetric encryption. In this implementation, the target key generated by the terminal based on the identity private key held by the terminal and the authentication public key provided by the authenticator is a symmetric key. The terminal signs the authentication attribute information of the media data by using the target key and based on a symmetric signature algorithm, to obtain a symmetric signature value, where the signature information in the digital watermark includes a part or all of content of the symmetric signature value. Correspondingly, the authenticator generates, by using the authentication private key held by the authenticator and the identity public key held by the terminal, a key that is the same as the target key, and uses the key to sign the authentication attribute information in the digital watermark based on the symmetric signature algorithm, to obtain the symmetric signature value. If the signature information in the digital watermark embedded into the media data matches the symmetric signature value obtained by the authenticator through calculation, the authenticator determines that the media data comes from the terminal holding the identity public key used to generate the key.

In this implementation, only the authenticator and the terminal can calculate a same symmetric key. Provided that the identity private key held by the terminal and the authentication private key held by the authenticator are not leaked, any third party other than the terminal and the authenticator cannot calculate the target key, and therefore cannot use the target key to obtain the signature information through calculation to forge the watermark. Therefore, another person can be prevented from maliciously forging the watermark and leaking the media data for framing.

Optionally, in the foregoing first possible implementation, the authentication public key held by the authenticator is jointly provided by a plurality of approvers, the authentication public key is a DKG public key, the plurality of approvers jointly hold n private key shards, a quantity of private key shards held by each approver is less than t, the DKG public key is obtained through calculation based on the n private key shards, a private key corresponding to the DKG public key is obtained based on at least t private key shards of the n private key shards, n is an integer greater than 1, and 2≤t≤n.

The DKG public key is a common public key calculated by a plurality of parties based on the n private key shards. The private key (a DKG private key for short) corresponding to the DKG public key is a secure aggregation of the n private key shards. A process of generating the DKG public key essentially belongs to secret sharing. In this application, a restoration threshold of the DKG private key is set to t, in other words, the DKG private key can be restored by using any quantity of private key shards greater than or equal to t private key shards in the n private key shards. The restoration threshold t of the DKG private key may be adjusted based on an actual requirement, to improve reliability, availability, and resilience. To obtain the authentication private key, the authenticator needs at least t private key shards. Because the quantity of private key shards held by each approver is less than t, the authenticator can restore the authentication private key only when two or more approvers agree. In other words, in this implementation, the authenticator needs to rely on the plurality of approvers to restore a private key corresponding to the authentication public key, and further obtains through calculation, with reference to the identity public key held by the terminal, a key that is the same as the target key used by the terminal to generate the digital watermark. In comparison with a solution in which the authenticator directly holds the authentication private key, in this solution, because the authenticator is supervised by the plurality of approvers, a risk that the authenticator maliciously forges a watermark to frame a terminal user can be reduced, reliability and watermark security of the authenticator are improved, and reliability of watermark source tracing is further improved.

Alternatively, in the foregoing first possible implementation, the authenticator may generate a public-private key pair including the authentication public key and the authentication private key.

In a second possible implementation, the solution of this application is implemented based on a watermarking algorithm combining asymmetric encryption. In this implementation, the target key generated by the terminal based on the identity private key held by the terminal and the authentication public key provided by the authenticator is an asymmetric key, and the target key is, for example, a private key in a public-private key pair. The terminal signs the authentication attribute information of the media data by using the target key and based on an asymmetric signature algorithm, to obtain an asymmetric signature value, where signature information in the digital watermark is the asymmetric signature value. Correspondingly, the authenticator generates, by using the authentication private key held by the authenticator and the identity public key held by the terminal, an asymmetric key corresponding to the target key, where the asymmetric key is, for example, a public key corresponding to the target key. Then, the authenticator performs signature verification on the authentication attribute information and the signature information in the digital watermark by using the generated key. If the signature verification succeeds, the authenticator determines that the media data into which the digital watermark is embedded comes from the terminal holding the identity public key used to generate the key.

In this implementation, only the terminal can calculate the target key used to generate the digital watermark, so that any third party including the authenticator can be prevented from maliciously forging the watermark and leaking the media data for framing. In addition, only the authenticator can calculate a key that can be used to verify the digital watermark generated by the terminal, that is, only the authenticator has the source tracing permission for the media data played by the terminal, which can well protect privacy of the terminal user.

The following describes the technical solution of this application in detail from a plurality of perspectives such as an application scenario, a method procedure, a software apparatus, a hardware apparatus, and a system.

The following describes an application scenario of embodiments of this application by using an example.

Embodiments of this application may be applied to various scenarios related to media data play and source tracing, and can implement copyright protection for media data. Optionally, the media data includes but is not limited to audio data, video data, file data, and other digital streaming media data, for example, a remote shared desktop, a remote shared document, and a remote shared application.

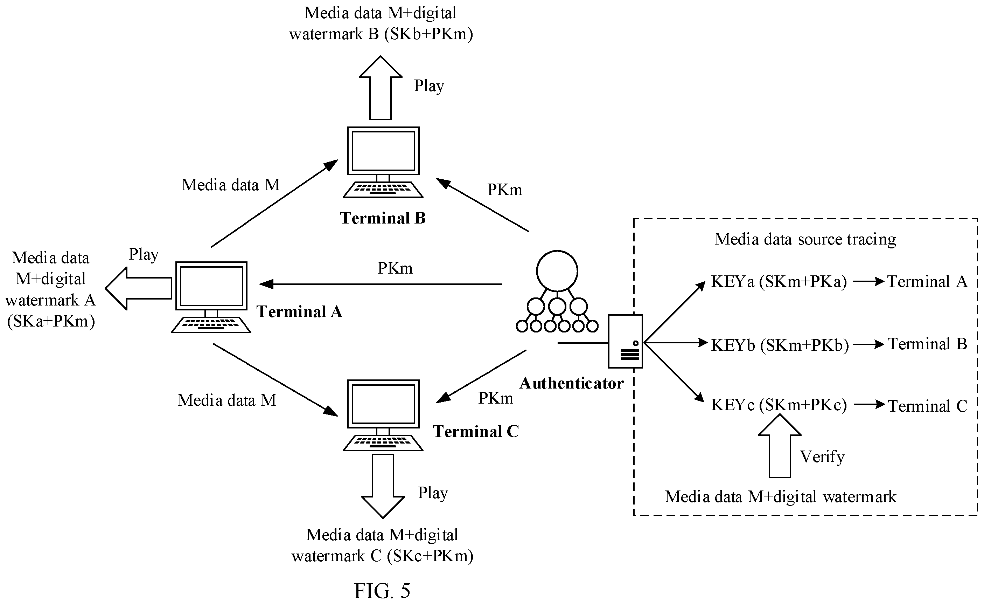

For example, FIG. 5 is a diagram of an application scenario according to an embodiment of this application. As shown in FIG. 5, the application scenario includes an authenticator and one or more terminals. The terminal is connected to the authenticator through a wired or wireless network. In FIG. 5, an example in which an application scenario includes three terminals (a terminal A, a terminal B, and a terminal C) is used, and a quantity of terminals is not used as a limitation on the application scenario of this application.

Optionally, the terminal may be a user terminal such as a mobile phone, a tablet, or a computer. Media data may be transmitted between terminals, and media data received from another terminal is locally played. For example, as shown in FIG. 5, the terminal A separately sends media data M to the terminal B and the terminal C, and then the terminal A, the terminal B, and the terminal C separately play the media data M. If the media data M is leaked, the media data may be leaked when the terminal A plays the media data, or may be leaked when the terminal B plays the media data, or may be leaked when the terminal C plays the media data.

The authenticator is an administrator or a trusted organization trusted by the terminal, and the authenticator may be a user terminal, a server, a cloud computing platform, or the like. The authenticator is configured to provide an authentication public key for the terminal, so that the terminal can generate a corresponding key with reference to an identity private key of the terminal, and further generate a digital watermark unique to the terminal by using the generated key, to embed the digital watermark into the media data for playing. For example, as shown in FIG. 5, a digital watermark A is embedded into the media data M played by the terminal A, and the digital watermark A is bound to an identity private key SKa held by the terminal A and an authentication public key PKm provided by the authenticator. A digital watermark B is embedded into the media data M played by the terminal B, and the digital watermark B is bound to an identity private key SKb held by the terminal B and the authentication public key PKm provided by the authenticator. A digital watermark C is embedded into the media data M played by the terminal C, and the digital watermark C is bound to an identity private key SKc held by the terminal C and the authentication public key PKm provided by the authenticator. Then, the authenticator may perform source tracing on the leaked media data M, to determine whether a leakage source is the terminal A, the terminal B, or the terminal C. For example, the authenticator generates a key KEYa by using an authentication private key SKm and an identity public key PKa held by the terminal A, generates a key KEYb by using the authentication private key SKm and an identity public key PKb held by the terminal B, and generates a key KEYc by using the authentication private key SKm and an identity public key PKc held by the terminal C, and then verifies a digital watermark in the leaked media data M by using the key KEYa, the key KEYb, and the key KEYc, to determine whether the digital watermark is the digital watermark A generated by the terminal A, the digital watermark B generated by the terminal B, or the digital watermark C generated by the terminal C, to determine the leakage source of the media data M.

Optionally, the application scenario shown in FIG. 5 is a video conference scenario, and the terminal is a conference terminal. The authenticator is a conference administrator, for example, a conference terminal used by the conference administrator. Usually, a video conference may include a plurality of participants, and one participant joins the video conference through one conference terminal. A form of the conference terminal may be a dedicated physical device, or may be a software program having a conference function. The software program may be run on various computing devices, for example, various user terminals such as a mobile phone, a tablet, and a computer. In this case, the computing device running the software program may also be considered as a conference terminal. The conference terminal joins the video conference through a conference service platform. Specifically, the conference terminal may obtain media data of the video conference from the conference service platform, and send locally collected media data to the conference server platform, so that the conference service platform forwards the media data to another conference terminal participating in the conference. The conference terminals can be connected through a wireless network, so that the participant can smoothly join the video conference without being limited by a geographical location. In some cases, one participant may include only one conference-participating user. For example, the conference-participating user joins a video conference through a conference software program running on a personal mobile phone. In some cases, one participant may also include a plurality of conference-participating users. For example, in a conference room scenario, a plurality of conference-participating users in a conference room join a video conference through one conference terminal in the conference room. The conference service platform may be a multipoint control unit (multipoint control unit, MCU).

In this embodiment of this application, each terminal holds a public-private key pair representing an identity of the terminal, and the public-private key pair is referred to as an identity public key and an identity private key. A public key (public key) and a private key (private key) are a key pair obtained by using an algorithm. If the public key is used to encrypt data, the private key may be used to decrypt the data. If the private key is used to sign the data, the public key may be used to perform signature verification. The public key is a part, of the key pair, that is open to a communication peer, and the private key is a non-public part of the key pair. In a normal case, an identity private key held by one terminal cannot be obtained by any third party including another terminal and the authenticator.

In this embodiment of this application, the identity public key and the identity private key that are held by the terminal may be a device public key and a device private key that are held by the terminal. For example, a dedicated conference terminal provided in a conference room may be used by one or more users, and the identity public key and the identity private key that are held by the terminal may be a device public key and a device private key that are held by the dedicated conference terminal. Alternatively, the identity public key and the identity private key that are held by the terminal may also be a user public key and a user private key of a user who logs in to the terminal. For example, the terminal is a computer device running a conference application, and the identity public key and the identity private key that are held by the terminal may be a user public key and a user private key of a current log-in user of the conference application. If the log-in user changes, the identity public key and the identity private key that are held by the terminal also change.

If the identity public key and the identity private key that are held by the terminal are the device public key and the device private key that are held by the terminal, when the terminal needs to use the identity public key and the identity private key, the terminal directly reads the device public key and the device private key from a local memory. If the identity public key and the identity private key that are held by the terminal are the user public key and the user private key of the user who logs in to the terminal, the terminal may obtain and store, based on information of the log-in user, the user public key and a signature of the user public key by using the user private key when the user logs in, and the signature is used to prove that the log-in user holds a private key corresponding to the user public key. In some cases, there may be no log-in user on the terminal. For example, a conference terminal in a conference room is public and does not require user log-in, but may be bound to a specific conference-participating user or user terminal during holding of a conference (being temporarily bound). In this case, the user public key and the user private key of the user bound to the terminal or the device public key and the device private key of the user terminal may also be used as the identity public key and the identity private key that are held by the terminal. If the identity public key and the identity private key that are held by the terminal are the user public key and the user private key of the user, or the device public key and the device private key of the user terminal (for example, a mobile phone or a tablet computer of the user), and the terminal and the user terminal are two different physical devices, the terminal may obtain the user public key or the device public key of the user terminal in a manner of Bluetooth, near field communication (near field communication, NFC), user input, or the like.

In the video conference scenario, a plurality of conference terminals participating in the conference may send, in advance, identity public keys held by the plurality of conference terminals to the conference service platform for storage. The conference service platform may store, by using a conference as a granularity, identity public keys held by a plurality of conference terminals in each conference. The conference may be identified by using a conference identifier and/or conference timestamp information. The conference identifier may be, for example, a conference number, and the conference timestamp information may include a start time and an end time for convening the conference. In this way, the conference administrator may obtain, from the conference service platform, the identity public keys respectively held by the plurality of conference terminals participating in the specified conference.

The following describes a method procedure in embodiments of this application by using an example.

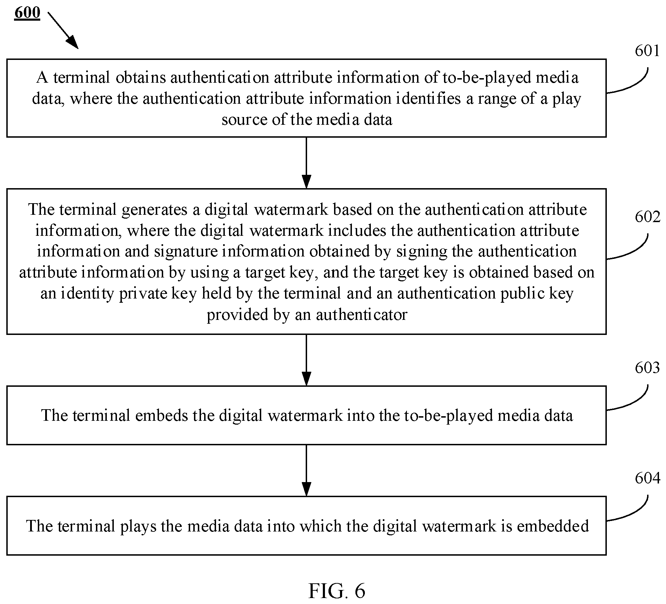

For example, FIG. 6 is a schematic flowchart of a media data play method according to an embodiment of this application. As shown in FIG. 6, the method 600 includes but is not limited to the following step 601 to step 604. The method 600 may be applied to any terminal in the application scenario shown in FIG. 5.

Step 601: A terminal obtains authentication attribute information of to-be-played media data, where the authentication attribute information identifies a range of a play source of the media data.

Optionally, the authentication attribute information of the media data may indirectly identify the range of the play source of the media data. For example, the authentication attribute information of the media data includes context information of the media data, and the context information may reflect a possible source of the media data, for example, from a specific conference or a specific website. Further, a terminal that may play the media data may be determined based on the context information. Alternatively, the authentication attribute information of the media data may directly identify the range of the play source of the media data. For example, the authentication attribute information of the media data includes a device identifier of the terminal that may play the media data. For example, in the application scenario shown in FIG. 5, authentication attribute information of the media data M may include a device identifier of the terminal A, a device identifier of the terminal B, and a device identifier of the terminal C, and indicates that a range of a play source of the media data M includes the terminal A, the terminal B, and the terminal C. In this embodiment of this application, the authentication attribute information of the media data is used as an auxiliary index for narrowing a source tracing range of the media data, and specific content of the authentication attribute information is not limited.

Optionally, embodiments of this application may be applied to a video conference scenario. The terminal is a conference terminal that participates in a conference, and media data to be played on the terminal comes from the conference. Authentication attribute information of the media data may include a conference identifier of the conference and/or conference timestamp information of the conference, and indicates that a range of a play source of the media data includes all conference terminals that participate in the conference terminal.

Optionally, that the terminal obtains the to-be-played media data may be that the terminal receives media data sent by another conference terminal participating in the conference, or may be that the terminal generates the to-be-played media data.

Step 602: The terminal generates a digital watermark based on the authentication attribute information, where the digital watermark includes the authentication attribute information and signature information obtained by signing the authentication attribute information by using a target key, and the target key is obtained based on an identity private key held by the terminal and an authentication public key provided by an authenticator.

Only the authenticator has a source tracing permission for the media data. Optionally, an implementation in which the terminal obtains the authentication public key provided by the authenticator may be as follows: The terminal sends a key obtaining request to the authenticator, where the key obtaining request includes the device identifier of the terminal. The terminal receives a key obtaining response sent by the authenticator, where the key obtaining response includes the authentication public key provided by the authenticator. Optionally, the key obtaining request may further include an identity public key held by the terminal.

Optionally, if the authentication attribute information of the media data is recorded as m, and the target key obtained based on the identity private key held by the terminal and the authentication public key provided by the authenticator is k, the digital watermark W generated by the terminal may be represented as W=m||sign(k, m). The symbol || represents character string concatenation, and sign(k, m) represents the signature information obtained by signing m by using k.

Step 603: The terminal embeds the digital watermark into the to-be-played media data.

Optionally, the media data is audio data, and watermark information may be embedded into the audio data by using an audio watermarking technology. For example, the watermark information may be embedded into different parameters such as a time domain, a frequency domain, a phase, and an amplitude in an audio signal, to ensure that quality and hearing of the audio signal are not affected. Alternatively, the media data is video data, and a digital watermark may be embedded into the video data in a form of an invisible watermark. In comparison with a visible watermark, the invisible watermark is more difficult to be removed by an attacker by using a technical means. Therefore, embedding the digital watermark into the video data in the form of the invisible watermark can reduce a risk of removing the digital watermark, thereby improving reliability of traceability of the media data.

Step 604: The terminal plays the media data into which the digital watermark is embedded.

In this embodiment of this application, the authentication attribute information of the media data and the signature information obtained by signing the authentication attribute information by using the target key are carried in the digital watermark. The authentication attribute information in the digital watermark may declare the range of the play source of the media data, and play a role of identity information of the media data, so that a source tracing range of the media data is narrowed. The signature information in the digital watermark is used to ensure authenticity of the authentication attribute information of the media data, that is, to ensure authenticity of the media data. Because the target key is obtained based on the identity private key held by the terminal and the authentication public key provided by the authenticator, provided that the identity private key held by the terminal is not leaked, another user terminal cannot calculate the target key, and therefore cannot use the target key to obtain the signature information through calculation to forge the watermark. Therefore, another person can be prevented from maliciously forging the watermark and leaking the media data for framing. In addition, in this embodiment of this application, the play source of the media data is proved by using the signature information, instead of directly carrying user or device identity information in the digital watermark. Therefore, leakage of the user or device identity information can also be avoided.

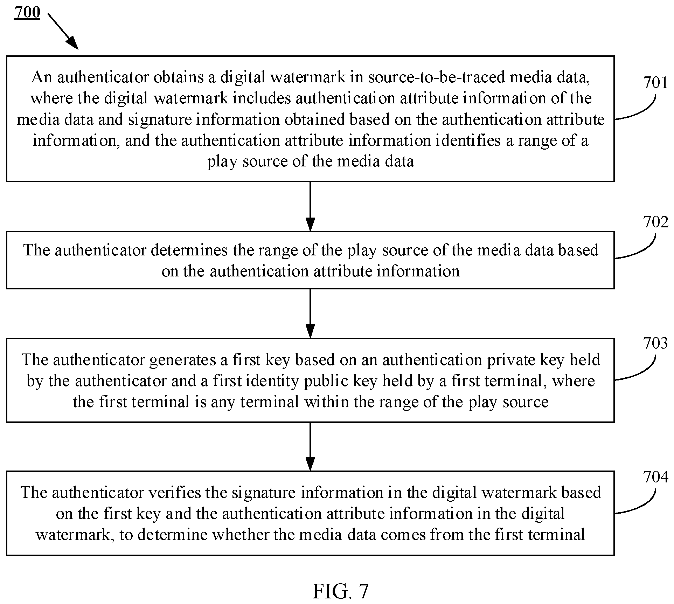

Further, when copyright information of the media data is questioned, or a leakage source needs to be located when the media data is leaked, the authenticator may perform source tracing and evidence collection on the media data. For example, FIG. 7 is a schematic flowchart of a media data source tracing method according to an embodiment of this application. As shown in FIG. 7, the method 700 includes but is not limited to the following step 701 to step 704. The method 700 may be applied to the authenticator in the application scenario shown in FIG. 5.

Step 701: An authenticator obtains a digital watermark in source-to-be-traced media data, where the digital watermark includes authentication attribute information of the media data and signature information obtained based on the authentication attribute information, and the authentication attribute information identifies a range of a play source of the media data.

For explanations of the authentication attribute information of the media data, refer to step 601. Details are not described in this embodiment of this application again.

Step 702: The authenticator determines the range of the play source of the media data based on the authentication attribute information.

Optionally, the authentication attribute information includes a conference identifier and/or conference timestamp information. Correspondingly, the authenticator determines, based on the authentication attribute information, a conference from which the media data comes, and then determines that the range of the play source of the media data includes a conference terminal participating in the conference.

Step 703: The authenticator generates a first key based on an authentication private key held by the authenticator and a first identity public key held by a first terminal, where the first terminal is any terminal within the range of the play source.

Optionally, the authenticator may further send a key obtaining response to the terminal after receiving a key obtaining request sent by the terminal, where the key obtaining response includes an authentication public key. The authentication private key held by the authenticator and the authentication public key provided by the authenticator for the terminal are a public-private key pair.

Step 704: The authenticator verifies the signature information in the digital watermark based on the first key and the authentication attribute information in the digital watermark, to determine whether the media data comes from the first terminal.

Optionally, when the range of the play source of the media data includes a plurality of terminals, if the authenticator determines that the media data does not come from the first terminal, the authenticator may alternatively generate a second key based on the authentication private key held by the authenticator and a second identity public key held by a second terminal, where the second terminal is any terminal other than the first terminal within the range of the play source. Then, the authenticator verifies the signature information in the digital watermark based on the second key and the authentication attribute information in the digital watermark, to determine whether the media data comes from the second terminal. In other words, the authenticator may perform traversal verification on all terminals within the range of the play source of the media data until the terminal from which the media data comes is determined. For each terminal within the range of the play source of the media data, for an implementation in which the authenticator verifies whether the media data comes from the terminal, refer to the implementation in which the authenticator verifies whether the media data comes from the first terminal described in this embodiment of this application.

In this embodiment of this application, only the authenticator that provides the authentication public key for the terminal can calculate a key for verifying the digital watermark generated by the terminal. Therefore, only the authenticator has a source tracing permission for the media data, and another terminal user cannot trace the play source of the media data even if the digital watermark in the media data is extracted. This can protect user privacy of the play source, and reduce a risk of leaking information about the play source.

Optionally, the solution of this application may be implemented based on a watermarking algorithm combining symmetric encryption, or may be implemented based on a watermarking algorithm combining asymmetric encryption. The following two possible implementations are separately used for description.

In a first possible implementation, the solution of this application is implemented based on a watermarking algorithm combining symmetric encryption. In step 602, the terminal generates the target key for the identity private key held by the terminal and the authentication public key provided by the authenticator by using a key agreement algorithm. Correspondingly, the terminal signs the authentication attribute information of the media data by using the target key and based on a symmetric signature algorithm, to obtain a symmetric signature value, where the signature information in the digital watermark may be the symmetric signature value, or may be a truncated result value of the symmetric signature value.

Correspondingly, in step 703, the authenticator generates the first key for the authentication private key held by the authenticator and the first identity public key held by the first terminal by using the key agreement algorithm. In step 704, the authenticator signs the authentication attribute information in the digital watermark by using the first key and based on the symmetric signature algorithm, to obtain the symmetric signature value. If the signature information in the digital watermark matches the symmetric signature value, the authenticator determines that the media data into which the digital watermark is embedded comes from the first terminal.

Herein, the authenticator and the terminal separately use the same key agreement algorithm to generate the same key for the private key held by the authenticator and the public key provided by the terminal. The key agreement (key agreement, KA) algorithm may be a Diffie-Hellman (Diffie-Hellman, DH) algorithm. For example, the identity public key held by the terminal is PKu, the identity private key held by the terminal is SKu, the authentication public key held by the authenticator is PKw, and the authentication private key held by the authenticator is SKw. In this case, the key generated by the terminal for SKu and PKw by using the DH algorithm may be represented as DH(SKu, PKw), the key generated by the authenticator for SKw and PKu by using the DH algorithm may be represented as DH(SKw, PKu), and DH(SKu, PKw) is the same as DH(SKw, PKu).

Optionally, that the terminal signs the authentication attribute information of the media data by using the target key and based on the symmetric signature algorithm, to obtain the symmetric signature value may be that the terminal first calculates a hash value of the authentication attribute information, and then signs the hash value by using the target key and based on the symmetric signature algorithm, to obtain the symmetric signature value. If the symmetric signature algorithm used by the terminal may be, for example, an advanced encryption standard (advanced encryption standard, AES) cypher-based message authentication code (cypher-based message authentication code, CMAC) (AES-CMAC for short) algorithm, the symmetric signature value may be an AES-CMAC value with a length of at least 128 bits. Correspondingly, that the authenticator signs the authentication attribute information in the digital watermark by using the first key and based on the symmetric signature algorithm, to obtain the symmetric signature value may be that the authenticator first calculates a hash value of the authentication attribute information, and then signs the hash value by using the first key and based on the symmetric signature algorithm, to obtain the symmetric signature value. The symmetric signature algorithm used by the authenticator is the same as that used by the terminal.

Optionally, the signature information in the digital watermark generated by the terminal is the symmetric signature value obtained by the terminal by signing the authentication attribute information of the media data by using the target key and based on the symmetric signature algorithm. Correspondingly, in the foregoing step 704, if the signature information in the digital watermark embedded into the media data is the same as the symmetric signature value obtained by the authenticator by signing the authentication attribute information in the digital watermark by using the first key and based on the symmetric signature algorithm, the authenticator determines that the media data comes from the first terminal.

Alternatively, the signature information in the digital watermark generated by the terminal is the truncated result value of the symmetric signature value obtained by the terminal by signing the authentication attribute information of the media data by using the target key and based on the symmetric signature algorithm. Correspondingly, in the foregoing step 704, if the signature information in the digital watermark embedded into the media data is the same as the truncated result value of the symmetric signature value obtained by the authenticator by signing the authentication attribute information in the digital watermark by using the first key and based on the symmetric signature algorithm, the authenticator determines that the media data comes from the first terminal.

Some media data is limited by a watermark payload capacity and cannot carry a complete signature length. For example, for audio data, if too much watermark information is embedded, fidelity and robustness of the audio data are affected. The symmetric signature value is usually less than an asymmetric signature value. Therefore, this type of media data is suitable for using the symmetric signature solution to shorten the signature length. However, the length of the symmetric signature value may exceed a watermark payload capacity limit. For example, an audio watermark payload in the market currently is generally within 8 bytes. Therefore, to carry the authentication attribute information and the signature, the symmetric signature value needs to be truncated (truncated) and then embedded into the truncated result value (Because the symmetric signature is reversible, the symmetric signature can be truncated without affecting signature verification. However, an asymmetric signature needs to rely on the complete signature value for signature verification). For details, refer to descriptions of introduction of a message authentication code (message authentication code, MAC) generation algorithm in section 2.4 of the request for comments (request for comments, RFC) file that is prepared by the internet engineering task force (Internet Engineering Task Force, IETF) and whose number is 4493 (IETF RFC4493 for short): "MAC may be truncated. According to [NIST-CMAC], at least 64-bit MAC needs to be used to protect against guessing attacks. In most cases, an important bit of the result needs to be truncated first". In this implementation, truncation processing is performed on the symmetric signature value, to embed the truncated result value into the audio data as the watermark information, so that a watermark embedding capacity can be reduced, thereby ensuring fidelity and robustness of the audio data after the watermark information is embedded. For video data, the symmetric signature value or the truncated result value of the symmetric signature value may be used as watermark information and embedded into the video data.

In the foregoing first possible implementation, only the authenticator and the terminal can calculate a same symmetric key. Provided that the identity private key held by the terminal and the authentication private key held by the authenticator are not leaked, any third party other than the terminal and the authenticator cannot calculate the target key, and therefore cannot use the target key to obtain the signature information through calculation to forge the watermark. Therefore, another person can be prevented from maliciously forging the watermark and leaking the media data for framing.

Optionally, in the foregoing first possible implementation, the authentication public key held by the authenticator is jointly provided by a plurality of approvers, the authentication public key is a DKG public key, the plurality of approvers jointly hold n private key shards, a quantity of private key shards held by each approver is less than t, the DKG public key is obtained through calculation based on the n private key shards, a private key corresponding to the DKG public key is obtained based on at least t private key shards of the n private key shards, n is an integer greater than 1, and 2≤t≤n. In this implementation, the authenticator needs to rely on the plurality of approvers to restore the authentication private key, and further obtains through calculation, with reference to the identity public key held by the terminal, a key that is the same as the target key used by the terminal to generate the digital watermark. In comparison with a solution in which the authenticator directly holds the authentication private key, in this solution, because the authenticator is supervised by the plurality of approvers, a risk that the authenticator maliciously forges a watermark to frame a terminal user can be reduced, reliability and watermark security of the authenticator are improved, and reliability of watermark source tracing is further improved.

In a second possible implementation, the solution of this application is implemented based on a watermarking algorithm combining asymmetric encryption. In step 602, the terminal generates the target key for the identity private key held by the terminal and the authentication public key provided by the authenticator by using an asymmetric key generation algorithm. The target key is an asymmetric key, for example, a private key in a public-private key pair. Correspondingly, the terminal signs the authentication attribute information of the media data by using the target key and based on an asymmetric signature algorithm, to obtain an asymmetric signature value, where signature information in the digital watermark is the asymmetric signature value.

Correspondingly, in step 703, the authenticator generates the first key for the authentication private key held by the authenticator and the first identity public key held by the first terminal by using the asymmetric key generation algorithm. In step 704, the authenticator performs signature verification on the authentication attribute information and the signature information in the digital watermark by using the first key. The authenticator determines that the media data into which the digital watermark is embedded comes from the first terminal if the signature verification succeeds.

Optionally, an implementation in which the terminal generates the target key by using the asymmetric key generation algorithm for the identity private key held by the terminal and the authentication public key provided by the authenticator is as follows: The terminal generates a derived key by using a key derivation function (key derivation function, KDF) and based on the identity private key held by the terminal and the authentication public key provided by the authenticator, and generates the target key based on the derived key and the identity private key held by the terminal. Correspondingly, an implementation in which the authenticator generates the first key by using the asymmetric key generation algorithm for the authentication private key held by the authenticator and the first identity public key held by the first terminal is as follows: The authenticator generates the derived key by using the key derivation function and based on the authentication private key held by the authenticator and the first identity public key held by the first terminal, and generates the first key based on the derived key and the authentication private key held by the authenticator. The asymmetric key generation algorithm used by the terminal and the asymmetric key generation algorithm used by the authenticator herein are matching algorithms used to generate a public-private key pair. For example, the terminal generates a private key in the public-private key pair by using the asymmetric key generation algorithm, and the authenticator generates a public key in the public-private key pair by using the matched asymmetric key generation algorithm.

In this implementation, the authenticator and the terminal may generate a pair of public and private keys respectively based on a private key held by the authenticator and a public key provided by the terminal. For example, the identity public key held by the terminal is PKu, the identity private key held by the terminal is SKu, the authentication public key held by the authenticator is PKw, and the authentication private key held by the authenticator is SKw. In this case, the key generated by the terminal based on SKu and PKw may be a private key SK, and SK=(KDF(SKu, PKw)+SKu) mod q, where KDF(SKu, PKw) is the derived key generated by the terminal for SKu and PKw by using the key derivation function, q is a prime number, mod q indicates that a modulo operation is performed on q, and a value range of SK is [1, q). The key generated by the authenticator based on SKw and SKu may be a public key PK, and PK=g^{KDF(SKw, PKu).}PKu, where KDF(SKw, PKu) is the derived key generated by the authenticator for SKw and PKu by using the key derivation function, and g is an original root of a prime number q. KDF(SKu, PKw) is the same as KDF(SKw, PKu), for example, K=KDF(SKu, PKw)=KDF(SKw, PKu).

The following describes, by using an example, an implementation algorithm procedure in which the terminal generates a signature private key based on the identity private key held by the terminal and the authentication public key provided by the authenticator, and the authenticator generates a signature public key corresponding to the signature private key based on the authentication private key held by the authenticator and the identity public key held by the terminal.

Step 1: Common parameters g, q, and KDF are preset in the terminal and the authenticator, where q is a prime number, and g is an original root of q.

Step 2: The terminal generates an identity public-private key pair, including an identity private key SKu and an identity public key PKu, where PKu=g^{SKu}. The authenticator generates a public-private key pair, including an authentication private key SKw and an authentication public key PKw, where PKw=g^{SKw}.

Step 3: The terminal generates a signature private key SK based on SKu and PKw: SK=(ck+SKu) mod q, where ck=KDF(PKw^{SKu}); and the authenticator generates a signature public key PK based on SKw and PKu: PK=g^{ck'}·PKu, where ck'=KDF(PKu^{SKw}).

Because PKu=g^{SKu} and PKw=g^{SKw}, PKw^{SKu}=g^{SKwSKu}=g^{SKuSKw}=PKu^{SKw}. Correspondingly, ck and ck' derived by using a same key derivation function KDF are also the same. Therefore, it may be obtained through verification that: g^{SK}=g^{(ck+SKu)}=g^{ck}·g^{SKu}=g^{ck'}·PKu=PK, that is, the signature private key SK generated by the terminal and the signature public key PK generated by the authenticator are a public-private key pair.

Optionally, the asymmetric signature algorithm may be, for example, an elliptic curve digital signature algorithm (elliptic curve digital signature algorithm, ECDSA). That the terminal signs the authentication attribute information of the media data by using the target key and based on the asymmetric signature algorithm, to obtain the asymmetric signature value may be that the terminal first runs a hash algorithm on the authentication attribute information, to obtain a data hash value, and then signs a fixed-length hash value by using the target key, to obtain the asymmetric signature value, where the asymmetric signature value is, for example, an ECDSA signature. Correspondingly, the authenticator first runs the hash algorithm on the authentication attribute information in the digital watermark, to obtain the data hash value, and then performs signature verification on the data hash value obtained through calculation and the signature information in the digital watermark by using the first key. The authenticator determines that the media data into which the digital watermark is embedded comes from the first terminal if the signature verification succeeds. The hash algorithm used by the authenticator for the authentication attribute information is the same as the hash algorithm used by the terminal for the authentication attribute information.

In the foregoing second possible implementation, only the terminal can calculate the target key used to generate the digital watermark, so that any third party including the authenticator can be prevented from maliciously forging the watermark and leaking the media data for framing. In addition, only the authenticator can calculate a key that can be used to verify the digital watermark generated by the terminal, that is, only the authenticator has the source tracing permission for the media data played by the terminal, which can well protect privacy of the terminal user.

Embodiments of this application may be applied to a copyright authentication scenario or a leakage locating scenario of the media data.

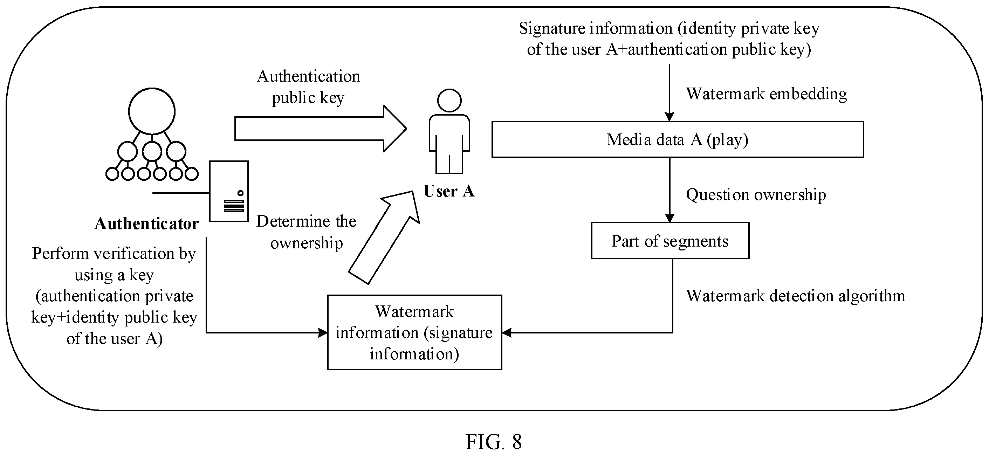

In a copyright authentication scenario of the media data, the authenticator determines whether the media data comes from one terminal, that is, determines whether ownership of the media data belongs to the terminal or a user of the terminal. For example, FIG. 8 is a diagram of a copyright authentication scenario of media data according to an embodiment of this application. As shown in FIG. 8, a user A is an owner of media data A. The user A may generate a key A based on an identity private key of the user A and an authentication public key provided by an authenticator, and embed signature information generated by using the key A into the media data A in a form of a digital watermark. If the ownership of the media data A is questioned, for example, a user B questions the ownership of the media data A when watching played content of the media data A, the user B may provide a part of segments of the media data A for the authenticator, and the authenticator extracts watermark information in the media data A by using a watermark detection algorithm, and verifies the signature information in the watermark information by using the key generated based on an authentication private key held by the authenticator and an identity public key of the user A, so that it can be determined that the media data A is owned by the user A.

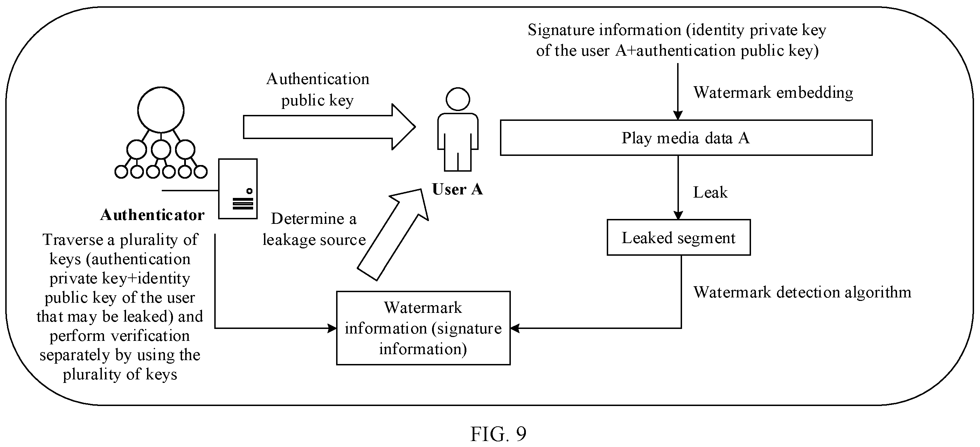

In the leakage locating scenario of the media data, the authenticator determines whether the media data comes from one terminal, that is, determines whether the media data is leaked by the terminal or the user of the terminal. For example, FIG. 9 is a diagram of a leakage locating scenario of media data according to an embodiment of this application. As shown in FIG. 9, a user A generates a key A based on an identity private key of the user A and an authentication public key provided by an authenticator, and embeds signature information generated by using the key A into the media data A in a form of a digital watermark for playing. If the media data A is leaked in a play process, a leaked segment of the media data A may be provided for the authenticator. The authenticator extracts watermark information in the leaked segment by using a watermark detection algorithm, and separately verifies the signature information in the watermark information by using a plurality of keys in a traversal manner, where each key is generated based on an authentication private key held by the authenticator and an identity public key, of a user, that may be leaked, so that it can be determined that a leakage source of the media data A is the user A.

A sequence of steps in the foregoing media data play method or source tracing method provided in embodiments of this application can be appropriately adjusted, and steps can also be correspondingly added or deleted based on a situation. For example, the solution provided in embodiments of this application is mainly used to resolve a problem that the media data is leaked or the ownership is questioned when the media data is transmitted on an air channel. During actual application, if the media data is leaked (for example, is copied) in another manner or only a copyright of the media data needs to be proved by the user, the solution provided in embodiments of this application may be used to embed the digital watermark into the media data and perform source tracing by using the method 700. In this case, step 604 may not be performed, to be specific, after embedding the digital watermark into the media data, the terminal may not play the media data into which the digital watermark is embedded. Any method variation readily figured out by a person skilled in the art within the technical scope disclosed in this application shall fall within the protection scope of this application.

The following describes a software apparatus in embodiments of this application by using an example.

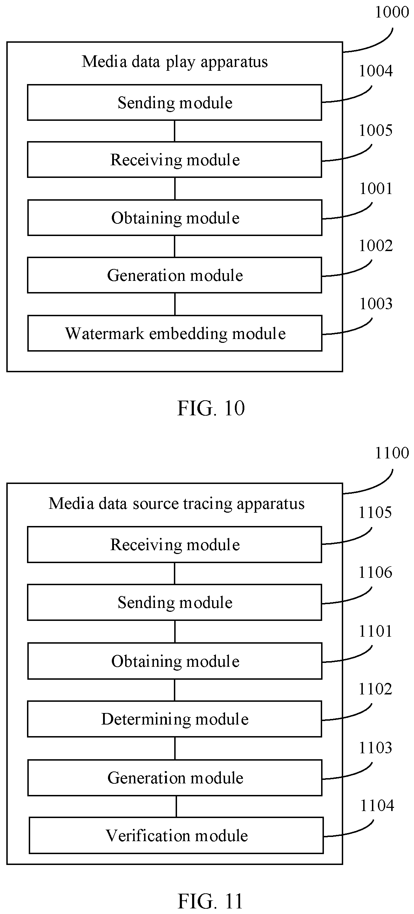

For example, FIG. 10 is a diagram of a structure of a media data play apparatus according to an embodiment of this application. The apparatus is used for a terminal. As shown in FIG. 10, the apparatus 1000 includes but is not limited to an obtaining module 1001, a generation module 1002, and a watermark embedding module 1003. Optionally, the apparatus 1000 further includes a sending module 1004 and a receiving module 1005.

The obtaining module 1001 is configured to obtain authentication attribute information of to-be-played media data, where the authentication attribute information identifies a range of a play source of the media data. The generation module 1002 is configured to generate a digital watermark based on the authentication attribute information, where the digital watermark includes the authentication attribute information and signature information obtained by signing the authentication attribute information by using a target key, the target key is obtained based on an identity private key held by the terminal and an authentication public key provided by an authenticator, and only the authenticator has a source tracing permission for the media data. The watermark embedding module 1003 is configured to: embed the digital watermark into the media data, and play the media data into which the digital watermark is embedded.

Optionally, the generation module 1002 is configured to: generate the target key for the identity private key and the authentication public key by using a key agreement algorithm; and sign the authentication attribute information by using the target key and based on a symmetric signature algorithm, to obtain a symmetric signature value, where the signature information is the symmetric signature value, or the signature information is a truncated result value of the symmetric signature value.

Optionally, the authentication public key is jointly provided by a plurality of approvers, the authentication public key is a DKG public key, the plurality of approvers jointly hold n private key shards, a quantity of private key shards held by each approver is less than t, the DKG public key is obtained through calculation based on the n private key shards, a private key corresponding to the DKG public key is obtained based on at least t private key shards of the n private key shards, n is an integer greater than 1, and 2≤t≤n.

Optionally, the generation module 1002 is configured to: generate the target key for the identity private key and the authentication public key by using an asymmetric key generation algorithm; and sign the authentication attribute information by using the target key and based on an asymmetric signature algorithm, to obtain an asymmetric signature value, where the signature information is the asymmetric signature value.

Optionally, the generation module 1002 is specifically configured to: generate a derived key based on the identity private key and the authentication public key by using a key derivation function; and generate the target key based on the derived key and the identity private key.

Optionally, the target key is SK, and SK=(K+SKu) mod q, where SKu is the identity private key, K is the derived key, q is a prime number, mod q indicates that a modulo operation is performed on q, and a value range of SK is [1, q).

Optionally, the sending module 1004 is configured to send a key obtaining request to the authenticator, where the key obtaining request includes a device identifier of the terminal. The receiving module 1005 is configured to receive a key obtaining response sent by the authenticator, where the key obtaining response includes the authentication public key.

Optionally, the terminal is a conference terminal participating in a conference, the media data comes from the conference, and the authentication attribute information includes a conference identifier of the conference and/or conference timestamp information of the conference.

Optionally, the receiving module 1005 is configured to receive the media data sent by another conference terminal participating in the conference.

For another example, FIG. 11 is a diagram of a structure of a media data source tracing apparatus according to an embodiment of this application. The apparatus is applied to an authenticator. As shown in FIG. 11, the apparatus 1100 includes but is not limited to an obtaining module 1101, a determining module 1102, a generation module 1103, and a verification module 1104. Optionally, the apparatus 1100 further includes a receiving module 1105 and a sending module 1106.

The obtaining module 1101 is configured to obtain a digital watermark in source-to-be-traced media data, where the digital watermark includes authentication attribute information of the media data and signature information obtained based on the authentication attribute information, and the authentication attribute information identifies a range of a play source of the media data. The determining module 1102 is configured to determine the range of the play source based on the authentication attribute information. The generation module 1103 is configured to generate a first key based on an authentication private key held by the authenticator and a first identity public key held by a first terminal, where the first terminal is any terminal within the range of the play source. The verification module 1104 is configured to verify the signature information based on the first key and the authentication attribute information, to determine whether the media data comes from the first terminal.

Optionally, the generation module 1103 is configured to generate the first key for the authentication private key and the first identity public key by using a key agreement algorithm. The verification module 1104 is configured to: sign the authentication attribute information by using the first key and based on a symmetric signature algorithm, to obtain a symmetric signature value; and determine that the media data comes from the first terminal if the signature information matches the symmetric signature value.

Optionally, an authentication public key corresponding to the authentication private key is jointly provided by a plurality of approvers, the authentication public key is a DKG public key, the plurality of approvers jointly hold n private key shards, a quantity of private key shards held by each approver is less than t, the DKG public key is obtained through calculation based on the n private key shards, the authentication private key is obtained based on at least t private key shards of the n private key shards, n is an integer greater than 1, and 2≤t≤n.

Optionally, a length of the signature information is less than a length of the symmetric signature value, and the verification module 1104 is configured to determine that the media data comes from the first terminal if the signature information is the same as a truncated result value of the symmetric signature value.

Optionally, the generation module 1103 is configured to generate the first key for the authentication private key and the first identity public key by using an asymmetric key generation algorithm. The verification module 1104 is configured to: perform signature verification on the authentication attribute information and the signature information by using the first key; and determine that the media data comes from the first terminal if the signature verification succeeds.

Optionally, the generation module 1103 is specifically configured to: a derived key based on the authentication private key and the first identity public key by using a key derivation function; and generate the first key based on the derived key and the authentication private key.

Optionally, the first key is PK, and PK=g^{K}·PKu, where PKu is the first identity public key, K is the derived key, and g is an original root of a prime number q.

Optionally, the receiving module 1105 is configured to receive a key obtaining request sent by a terminal within the range of the play source, where the key obtaining request includes a device identifier of the terminal. The sending module 1106 is configured to send a key obtaining response to the terminal, where the key obtaining response includes the authentication public key corresponding to the authentication private key.

Optionally, the range of the play source includes a plurality of terminals. The generation module 1103 is further configured to: if it is determined that the media data does not come from the first terminal, generate a second key based on the authentication private key and a second identity public key held by a second terminal, where the second terminal is any terminal other than the first terminal within the range of the play source. The verification module 1104 is further configured to verify the signature information based on the second key and the authentication attribute information, to determine whether the media data comes from the second terminal.

Optionally, the authentication attribute information includes a conference identifier and/or conference timestamp information. The determining module 1102 is specifically configured to: determine, based on the authentication attribute information, a conference from which the media data comes; and determine that the range of the play source includes a conference terminal participating in the conference.

The following describes a hardware apparatus in embodiments of this application by using an example.

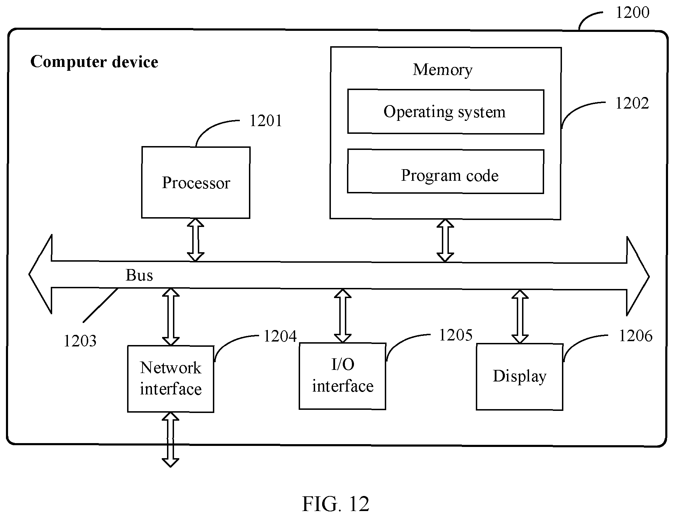

For example, FIG. 12 is a diagram of a hardware structure of a computer device according to an embodiment of this application. The computer device may be the terminal or the authenticator in the foregoing embodiments. As shown in FIG. 12, the computer device 1200 includes a processor 1201 and a memory 1202. The memory 1201 and the memory 1202 are connected through a bus 1203. FIG. 12 is described by using an example in which the processor 1201 and the memory 1202 are independent of each other. Optionally, the processor 1201 and the memory 1202 are integrated together. Optionally, with reference to FIG. 5, the computer device 1200 in FIG. 12 may be the authenticator or any terminal shown in FIG. 5.

The memory 1202 is configured to store a computer program, and the computer program includes an operating system and program code. The memory 1202 is a storage medium of various types, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disk storage, an optical disc storage, a magnetic disk, or another magnetic storage device.

The processor 1201 is a general-purpose processor or a dedicated processor. The processor 1201 may be a single-core processor or a multi-core processor. The processor 1201 includes at least one circuit, to perform the method 600 or the method 700 provided in embodiments of this application.

Optionally, the computer device 1200 further includes a network interface 1204, and the network interface 1204 is connected to the processor 1201 and the memory 1202 through the bus 1203. The network interface 1204 can implement communication between the computer device 1200 and another device. For example, the processor 1201 can interact with the another device through the network interface 1204, for example, communicate with an MCU through the network interface 1204.

Optionally, the computer device 1200 further includes an input/output (input/output, I/O) interface 1205, and the I/O interface 1205 is connected to the processor 1201 and the memory 1202 through the bus 1203. The processor 1201 can receive an input command, data, or the like through the I/O interface 1205. The I/O interface 1205 is configured to connect the computer device 1200 to an input device, where the input device is, for example, a keyboard or a mouse. Optionally, in some possible scenarios, the network interface 1204 and the I/O interface 1205 are collectively referred to as a communication interface.

Optionally, the computer device 1200 further includes a display 1206, and the display 1206 is connected to the processor 1201 and the memory 1202 through the bus 1203. The display 1206 can be configured to display an intermediate result, a final result, and/or the like generated by the processor 1201 when performing the foregoing method. In a possible implementation, the display 1206 is a touchscreen, to provide a human-computer interaction interface.

The bus 1203 is any type of communication bus configured to implement interconnection between internal components of the computer device 1200, for example, a system bus. In embodiments of this application, an example in which the foregoing internal components of the computer device 1200 are interconnected through the bus 1203 is used for description. Optionally, the foregoing internal components of the computer device 1200 are communicatively connected to each other in a connection manner other than the bus 1203. For example, the foregoing internal components of the computer device 1200 are interconnected through a logical interface inside the computer device 1200.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Embodiments of this application impose no limitation on specific implementations of the foregoing components.

The computer device 1200 shown in FIG. 12 is merely an example. In an implementation process, the computer device 1200 includes other components, which are not enumerated in this specification. The computer device 1200 shown in FIG. 12 may play media data by performing all or some steps of the method 600 provided in the foregoing embodiments, or the computer device 1200 shown in FIG. 12 may implement media data source tracing by performing all or some steps of the method 700 provided in the foregoing embodiments.

The following describes a system in embodiments of this application by using an example.

An embodiment of this application further provides a media data protection system. The media data protection system includes a terminal and an authenticator. The terminal is configured to perform the foregoing method 600, and the authenticator is configured to perform the foregoing method 700.

Optionally, the system is a video conference system, the terminal is a conference terminal, and the authenticator is a conference administrator.

An embodiment of this application further provides a computer-readable storage medium. The computer-readable storage medium stores instructions; and when the instructions are executed by a processor, the foregoing method 600 or method 700 is implemented.

An embodiment of this application further provides a computer program product. The computer program product includes a computer program. When the computer program is executed by a processor, the foregoing method 600 or method 700 is implemented.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but shall not be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A media data play method, applied to a terminal, wherein the method comprises:
obtaining authentication attribute information of to-be-played media data, wherein the authentication attribute information identifies a range of a play source of the media data;
generating a digital watermark based on the authentication attribute information, wherein the digital watermark comprises the authentication attribute information and signature information obtained by signing the authentication attribute information by using a target key, the target key is obtained based on an identity private key held by the terminal and an authentication public key provided by an authenticator, and only the authenticator has a source tracing permission for the media data; and
embedding the digital watermark into the media data, and playing the media data into which the digital watermark is embedded.

2. The method according to claim 1, wherein the method further comprises:
generating the target key for the identity private key and the authentication public key by using a key agreement algorithm; and
signing the authentication attribute information by using the target key comprises:
signing the authentication attribute information by using the target key and based on a symmetric signature algorithm, to obtain a symmetric signature value, wherein the signature information is the symmetric signature value, or the signature information is a truncated result value of the symmetric signature value.

3. The method according to claim 2, wherein the authentication public key is jointly provided by a plurality of approvers, the authentication public key is a distributed key generation DKG public key, the plurality of approvers jointly hold n private key shards, a quantity of private key shards held by each approver is less than t, the DKG public key is obtained through calculation based on the n private key shards, a private key corresponding to the DKG public key is obtained based on at least t private key shards of the n private key shards, n is an integer greater than 1, and 2≤t≤n.

4. The method according to claim 1, wherein the method further comprises:
generating the target key for the identity private key and the authentication public key by using an asymmetric key generation algorithm; and
signing the authentication attribute information by using the target key comprises:
signing the authentication attribute information by using the target key and based on an asymmetric signature algorithm, to obtain an asymmetric signature value, wherein the signature information is the asymmetric signature value.

5. The method according to claim 4, wherein generating the target key for the identity private key and the authentication public key by using the asymmetric key generation algorithm comprises:
generating a derived key based on the identity private key and the authentication public key by using a key derivation function; and
generating the target key based on the derived key and the identity private key.

6. The method according to claim 5, wherein the target key is SK, and SK=(K+SKu) mod q, wherein SKu is the identity private key, K is the derived key, q is a prime number, mod q indicates that a modulo operation is performed on q, and a value range of SK is [1, q).

7. The method according to any one of claims 1 to 6, wherein the method further comprises:
sending a key obtaining request to the authenticator, wherein the key obtaining request comprises a device identifier of the terminal; and
receiving a key obtaining response sent by the authenticator, wherein the key obtaining response comprises the authentication public key.

8. The method according to any one of claims 1 to 7, wherein the terminal is a conference terminal participating in a conference, the media data comes from the conference, and the authentication attribute information comprises a conference identifier of the conference and/or conference timestamp information of the conference.

9. The method according to claim 8, wherein the method further comprises:
receiving the media data sent by another conference terminal participating in the conference.

10. A media data source tracing method, applied to an authenticator, wherein the method comprises:
obtaining a digital watermark in source-to-be-traced media data, wherein the digital watermark comprises authentication attribute information of the media data and signature information obtained based on the authentication attribute information, and the authentication attribute information identifies a range of a play source of the media data;
determining the range of the play source based on the authentication attribute information;
generating a first key based on an authentication private key held by the authenticator and a first identity public key held by a first terminal, wherein the first terminal is any terminal within the range of the play source; and
verifying the signature information based on the first key and the authentication attribute information, to determine whether the media data comes from the first terminal.

11. The method according to claim 10, wherein generating the first key based on the authentication private key held by the authenticator and the first identity public key held by the first terminal comprises:
generating the first key for the authentication private key and the first identity public key by using a key agreement algorithm; and
verifying the signature information based on the first key and the authentication attribute information comprises:
signing the authentication attribute information by using the first key and based on a symmetric signature algorithm, to obtain a symmetric signature value; and
determining that the media data comes from the first terminal if the signature information matches the symmetric signature value.

12. The method according to claim 11, wherein an authentication public key corresponding to the authentication private key is jointly provided by a plurality of approvers, the authentication public key is a distributed key generation DKG public key, the plurality of approvers jointly hold n private key shards, a quantity of private key shards held by each approver is less than t, the DKG public key is obtained through calculation based on the n private key shards, the authentication private key is obtained based on at least t private key shards of the n private key shards, n is an integer greater than 1, and 2≤t≤n.

13. The method according to claim 11 or 12, wherein a length of the signature information is less than a length of the symmetric signature value, and determining that the media data comes from the first terminal if the signature information matches the symmetric signature value comprises:
determining that the media data comes from the first terminal if the signature information is the same as a truncated result value of the symmetric signature value.

14. The method according to claim 10, wherein generating the first key based on the authentication private key held by the authenticator and the first identity public key held by the first terminal comprises:
generating the first key for the authentication private key and the first identity public key by using an asymmetric key generation algorithm; and
verifying the signature information based on the first key and the authentication attribute information comprises:
performing signature verification on the authentication attribute information and the signature information by using the first key; and
determining that the media data comes from the first terminal if the signature verification succeeds.

15. The method according to claim 14, wherein generating the first key for the authentication private key and the first identity public key by using the asymmetric key generation algorithm comprises:
generating a derived key based on the authentication private key and the first identity public key by using a key derivation function; and
generating the first key based on the derived key and the authentication private key.

16. The method according to claim 15, wherein the first key is PK, and PK=g^{K}·PKu, wherein PKu is the first identity public key, K is the derived key, and g is an original root of a prime number q.

17. The method according to any one of claims 10 to 16, wherein the method further comprises:
receiving a key obtaining request sent by a terminal within the range of the play source, wherein the key obtaining request comprises a device identifier of the terminal; and
sending a key obtaining response to the terminal, wherein the key obtaining response comprises the authentication public key corresponding to the authentication private key.

18. The method according to any one of claims 10 to 17, wherein a plurality of terminals are comprised within the range of the play source, and the method further comprises:
if it is determined that the media data does not come from the first terminal, generating a second key based on the authentication private key and a second identity public key held by a second terminal, wherein the second terminal is any terminal other than the first terminal within the range of the play source; and
verifying the signature information based on the second key and the authentication attribute information, to determine whether the media data comes from the second terminal.

19. The method according to any one of claims 10 to 18, wherein the authentication attribute information comprises a conference identifier and/or conference timestamp information, and determining the range of the play source based on the authentication attribute information comprises:
determining, based on the authentication attribute information, a conference from which the media data comes; and
determining that a conference terminal participating in the conference is comprised within the range of the play source.

20. A media data play apparatus, used for a terminal, wherein the apparatus comprises:
an obtaining module, configured to obtain authentication attribute information of to-be-played media data, wherein the authentication attribute information identifies a range of a play source of the media data;
a generation module, configured to generate a digital watermark based on the authentication attribute information, wherein the digital watermark comprises the authentication attribute information and signature information obtained by signing the authentication attribute information by using a target key, the target key is obtained based on an identity private key held by the terminal and an authentication public key provided by an authenticator, and only the authenticator has a source tracing permission for the media data; and
a watermark embedding module, configured to: embed the digital watermark into the media data, and play the media data into which the digital watermark is embedded.

21. The apparatus according to claim 20, wherein the generation module is configured to:
generate the target key for the identity private key and the authentication public key by using a key agreement algorithm; and
sign the authentication attribute information by using the target key and based on a symmetric signature algorithm, to obtain a symmetric signature value, wherein the signature information is the symmetric signature value, or the signature information is a truncated result value of the symmetric signature value.

22. The apparatus according to claim 21, wherein the authentication public key is jointly provided by a plurality of approvers, the authentication public key is a distributed key generation DKG public key, the plurality of approvers jointly hold n private key shards, a quantity of private key shards held by each approver is less than t, the DKG public key is obtained through calculation based on the n private key shards, a private key corresponding to the DKG public key is obtained based on at least t private key shards of the n private key shards, n is an integer greater than 1, and 2≤t≤n.

23. The apparatus according to claim 20, wherein the generation module is configured to:
generate the target key for the identity private key and the authentication public key by using an asymmetric key generation algorithm; and
sign the authentication attribute information by using the target key and based on an asymmetric signature algorithm, to obtain an asymmetric signature value, wherein the signature information is the asymmetric signature value.

24. The apparatus according to claim 23, wherein the generation module is configured to:
generate a derived key based on the identity private key and the authentication public key by using a key derivation function; and
generate the target key based on the derived key and the identity private key.

25. The apparatus according to claim 24, wherein the target key is SK, and SK=(K+SKu) mod q, wherein SKu is the identity private key, K is the derived key, q is a prime number, mod q indicates that a modulo operation is performed on q, and a value range of SK is [1, q).

26. The apparatus according to any one of claims 20 to 25, wherein the apparatus further comprises:
a sending module, configured to send a key obtaining request to the authenticator, wherein the key obtaining request comprises a device identifier of the terminal; and
a receiving module, configured to receive a key obtaining response sent by the authenticator, wherein the key obtaining response comprises the authentication public key.

27. The apparatus according to any one of claims 20 to 26, wherein the terminal is a conference terminal participating in a conference, the media data comes from the conference, and the authentication attribute information comprises a conference identifier of the conference and/or conference timestamp information of the conference.

28. The apparatus according to claim 27, wherein the apparatus further comprises:
a receiving module, configured to receive the media data sent by another conference terminal participating in the conference.

29. A media data source tracing apparatus, used for an authenticator, wherein the apparatus comprises:
an obtaining module, configured to obtain a digital watermark in source-to-be-traced media data, wherein the digital watermark comprises authentication attribute information of the media data and signature information obtained based on the authentication attribute information, and the authentication attribute information identifies a range of a play source of the media data;
a determining module, configured to determine the range of the play source based on the authentication attribute information;
a generation module, configured to generate a first key based on an authentication private key held by the authenticator and a first identity public key held by a first terminal, wherein the first terminal is any terminal within the range of the play source; and
a verification module, configured to verify the signature information based on the first key and the authentication attribute information, to determine whether the media data comes from the first terminal.

30. The apparatus according to claim 29, wherein
the generation module is configured to generate the first key for the authentication private key and the first identity public key by using a key agreement algorithm; and
the verification module is configured to: sign the authentication attribute information by using the first key and based on a symmetric signature algorithm, to obtain a symmetric signature value; and determine that the media data comes from the first terminal if the signature information matches the symmetric signature value.

31. The apparatus according to claim 30, wherein an authentication public key corresponding to the authentication private key is jointly provided by a plurality of approvers, the authentication public key is a distributed key generation DKG public key, the plurality of approvers jointly hold n private key shards, a quantity of private key shards held by each approver is less than t, the DKG public key is obtained through calculation based on the n private key shards, the authentication private key is obtained based on at least t private key shards of the n private key shards, n is an integer greater than 1, and 2≤t≤n.

32. The apparatus according to claim 30 or 31, wherein a length of the signature information is less than a length of the symmetric signature value, and the verification module is configured to:
determine that the media data comes from the first terminal if the signature information is the same as a truncated result value of the symmetric signature value.

33. The apparatus according to claim 29, wherein
the generation module is configured to generate the first key for the authentication private key and the first identity public key by using an asymmetric key generation algorithm; and
the verification module is configured to perform signature verification on the authentication attribute information and the signature information by using the first key; and determine that the media data comes from the first terminal if the signature verification succeeds.

34. The apparatus according to claim 33, wherein the generation module is configured to:
generate a derived key based on the authentication private key and the first identity public key by using a key derivation function; and
generate the first key based on the derived key and the authentication private key.

35. The apparatus according to claim 34, wherein the first key is PK, and PK=g^{K}·PKu, wherein PKu is the first identity public key, K is the derived key, and g is an original root of a prime number q.

36. The apparatus according to any one of claims 29 to 35, wherein the apparatus further comprises:
a receiving module, configured to receive a key obtaining request sent by a terminal within the range of the play source, wherein the key obtaining request comprises a device identifier of the terminal; and
a sending module, configured to send a key obtaining response to the terminal, wherein the key obtaining response comprises the authentication public key corresponding to the authentication private key.

37. The apparatus according to any one of claims 29 to 36, wherein a plurality of terminals are comprised within the range of the play source;
the generation module is further configured to: if it is determined that the media data does not come from the first terminal, generate a second key based on the authentication private key and a second identity public key held by a second terminal, wherein the second terminal is any terminal other than the first terminal within the range of the play source; and
the verification module is further configured to verify the signature information based on the second key and the authentication attribute information, to determine whether the media data comes from the second terminal.

38. The apparatus according to any one of claims 29 to 37, wherein the authentication attribute information comprises a conference identifier and/or conference timestamp information, and the determining module is configured to:
determine, based on the authentication attribute information, a conference from which the media data comes; and
determine that a conference terminal participating in the conference is comprised within the range of the play source.

39. A media data protection system, comprising a terminal and an authenticator, wherein the terminal is configured to perform the method according to any one of claims 1 to 9, and the authenticator is configured to perform the method according to any one of claims 10 to 19.

40. The system according to claim 39, wherein the system is a video conference system, the terminal is a conference terminal, and the authenticator is a conference administrator.

41. A terminal, comprising: a processor and a memory, wherein
the memory is configured to store a computer program, wherein the computer program comprises program instructions; and
the processor is configured to invoke the computer program, to implement the method according to any one of claims 1 to 9.

42. A computer device, comprising: a processor and a memory, wherein
the memory is configured to store a computer program, wherein the computer program comprises program instructions; and
the processor is configured to invoke the computer program, to implement the method according to any one of claims 10 to 19.

43. A computer-readable storage medium, wherein the computer-readable storage medium stores instructions; and when the instructions are executed by a processor, the method according to any one of claims 1 to 19 is implemented.

44. A computer program product, comprising a computer program, wherein when the computer program is executed by a processor, the method according to any one of claims 1 to 19 is implemented.
